# EUROPÄISCHE PATENTSCHRIFT

(11) **EP 0 791 390 B1**
(45) Veröffentlichungstag und Bekanntmachung des Hinweises auf die Patenterteilung: **09.07.2003**
(21) Anmeldenummer: 97102185.2
(22) Anmeldetag: 12.02.1997
(51) Int. Cl.: B01D 53/94, B01J 23/00

(54) **Verfahren und Vorrichtung zur katalytischen Gasreinigung**
Process and device for the catalytic gas purification
Procédé et dispositif pour la purification de gaz

(30) Priorität: 23.02.1996 DE 19606657
(43) Veröffentlichungstag der Anmeldung: 27.08.1997
(73) Patentinhaber: DaimlerChrysler AG, 70567 Stuttgart (DE)
(72) Erfinder: Bögner, Walter, 71686 Remseck (DE); Roitzheim, Rolf-Dirc, Dr., 89160 Dornstadt (DE); Hartweg, Martin, Dr., 89155 Erbach (DE); Seibold, Andrea, 89134 Blaustein (DE); Fetzer, Thomas, Dr., 67246 Speyer (DE); Morsbach, Bernd, 67069 Ludwigshafen (DE)

(56) Entgegenhaltungen:
- EP-A- 0 210 681
- EP-A- 0 540 280
- EP-A- 0 676 232
- EP-A- 0 685 253
- EP-A- 0 687 499
- WO-A-94/04258
- DE-C- 4 445 945
- FR-A- 2 728 302

## Beschreibung

Die Erfindung betrifft eine Vorrichtung zum reinigenden Behandeln von strömenden Gasen, wie es/sie in der Industrie angewendet/verwandt und aus der gattungsbilden zugrundegelegten EP 210 681 A1 als bekannt hervorgeht.

Aus der zugrundegelegten EP 210 681 A1 ist eine Vorrichtung zum reinigenden Behandeln von strömenden Gasen, mit einer Behandlungseinheit, bei mit Kohlenwasserstoffen betrieben Verbrennungskraftmaschinen, bekannt bei der
- daß das Trägermaterial eine Zusammensetzung der allgemeinen chemischen Formel AₐB_{b}O₄ bzw. A-Oxid·B-Oxid aufweist, wobei A und B Metalle sind, und zumindest mikroskopisch eine kristalline oder kristallähnliche kubische Gitterstruktur mit flächenzentriert angeordneten Sauerstoffatomen und tetraedrischen und oktaedrischen Lücken besitzt, wobei in den tetraedrischen Lücken die A-Teilchen und bis zu 50% der B-Teilchen und in den oktaedrischen Lücken die restlichen B-Teilchen angeordnet sind, und a + b ≤ 3 und a, b > 0 bedeuten, und
- die A-Teilchen ein oder mehrere Elemente der A-Gruppe Mg, Ca, Mn, Fe, Ni, Co Cu, Zn, Sn und Ti und die B-Teilchen ein, vorzugsweise mehrere Elemente der B-Gruppe Al, Ga, In, Co, Fe, Cr, Mn, Cu, Zn, Sn, Ti und Ni darstellen, wobei für A- und B-Teilchen der Ausschlußgruppe Mn, Fe und Co die jeweils verwendeten A- und B-Teilchen ungleich sind und
- auf dem Trägermaterial Cu, Co, Legierungen von Cu oder Co oder Mischungen davon aufgetragen sind.

Bei dem zugehörigen Verfahren werden
- dem zu reinigenden Gas zumindest bereichsweise bei Temperaturen unterhalb einer Freigabetemperatur von zumindest 145 °C Stickoxide zumindest teilweise entzogen,
- die entzogenen Stickoxide oberhalb der Freigabetemperatur wieder an das zu behandelnde Gas abgegeben und
- die freigegebenen Stickoxide anschließend katalytisch reduziert.
- Als Reduktionsmittel wird heirbei Wasserstof verwendet.

Aus der EP 676 232 A1 ist ein Verfahren zur Reinigung von Abgasen aus Verbrennungsmaschinen bekannt, bei dem bei heterogenen katalytischen Reaktionen die Reagenzien vom Katalysator absorbiert werden. In Abstrahierender Weise kann das Adsorbieren als Zwischenspeicherung der Reagenzien betrachtet werden.

Aus der WO 94/04258 A1 ist ein Verfahren zum Reinigen von Gasen bekannt, bei dem dem Gas zwischen 50 °C und 300 °C Stickoxide mittels eines Zwischenspeichers entzogen werden. Bei Temperaturen oberhalb 100 °C werden die Stickoxide wieder an das zu behandelnde Gas abgegeben und anschließend katalytisch reduziert. Der entsprechende Zwischenspeicher besteht aus einem aus einem Speichermaterial und einem Trägermaterial für das Speichermaterial, wobei das Speichermaterial aus einem oder mehreren Metallen und/oder deren Oxiden und/oder deren Legierungen zusammengesetzt ist.

In der Abgastechnik ist es bekannt, zur Reduktion von Stickoxiden katalytisch aktive Spinelle und/oder spinellartige Zusammensetzungen der allgemeinen chemischen Formel

Metall (I) Metall (II)Al₂O₄ bzw.

Metall (I) Oxid·Metall (II) Oxid·Al₂O₃

zu verwenden. Allerdings setzt deren katalytische Wirkung in nennenswertem Umfang erst oberhalb ca. 150 °C ein. Werden derartige Materialien bspw. zur Abgasreinigung, insbesondere von Verbrennungskraftmaschinen eingesetzt, ist die Verringerung von Stickoxiden in der Startphase gering und der Ausstoß an diesen Stoffen hoch. Des weiteren zeigen diese Materialien bei Anwesenheit von Wasser und/oder Wasserdampf hinsichtlich den Stickoxiden eine zumindest verringerte Wirkung.

Aus der WO 94/02244 A1 ist ein silberhaltiger Trägerkatalysator und dessen Herstellungsverfahren bekannt, der zur Zersetzung von Lachgas verwandt wird. Eine Anwendung hinsichtlich Stickoxiden, insbesondere deren Speicherung bei Temperaturen unter 200 °C ist hieraus nicht bekannt.

Die Aufgabe der Erfindung ist es, eine Vorrichtung zu entwickeln, mit der bei Temperaturen unterhalb 200 °C der Schadstoffanteil von Stickoxiden in Gasen, und ggf. bei Anwesenheit von Wasser und/oder Wasserdampf verringert werden kann.

Die Aufgabe wird erfindungsgemäß mit einer Vorrichtung mit den kennzeichnenden Merkmalen des Anspruchs 1 gelöst. Durch innerhalb des angegebenen Temperaturintervalls erfolgende Entnahme von Stickoxiden aus dem strömenden Gas ist der Gesamt-Stickoxidanteil gesenkt. Die Entnahme erfolgt sinnvollerweise durch einen günstigerweise porösen und in seinem Innern Gasströmkanäle aufweisenden Zwischenspeicher, der aus zumindest zwei Materialien, nämlich einem Speichermaterial für die Stickoxid und einem Trägermaterial gebildet ist.

Zweckmäßigerweise wird ein Trägermaterial gewählt, das gleichzeitig im stickoxidspeichernden Temperaturintervall eine hinsichtlich Kohlenwasserstoffen speichernde und oberhalb einer stoffspezifischen Ansprechtemperatur hinsichtlich Stickoxiden eine katalytisch aktive Wirkung aufweist. Von besonderem Vorteil ist dies beim Einsatz des Verfahrens bzw. des Zwischenspeichers bei mit Kohlenwasserstoffen betrieben Verbrennungskraftmaschinen, vorzugsweise Kraftwerken oder Benzin- oder Diesel-Motoren.

Günstigerweise werden von dem Trägermaterial die gespeicherten Kohlenwasserstoffe bei Temperaturen oberhalb der Ansprechtemperatur, bei der die katalytische Reduktion der Stickoxide unter Zuhilfenahme von Kohlenwasserstoffen erfolgt, wieder an das Gas abgegeben.

Hierbei ist es günstig, wenn die Ansprechtemperatur des Trägermaterials im Bereich oder unterhalb der oberen Grenze des Stickoxidspeichernden Temperaturintervalls angeordnet ist, da dann die Reduktion von Stickoxiden zunimmt, wenn die Speicherwirkung des Speichermaterials nachläßt.

Als Trägermaterial für das Speichermaterial des Zwischenspeichers ist es sinnvoll Spinelle und/oder spinellartige Zusammensetzungen gemäß der formellen chemischen Formel CuₓMe_{y}Al₂O₄ zu verwenden, da diese bei höheren Temperaturen (größer ca. 150 °C) eine nennenswerten katalytische Wirkung hinsichtlich der Stickoxide aufweisen. Hierdurch werden in diesem Fall bei tieferen Temperaturen dem Gas nicht nur die Stickoxide, sondern auch die Kohlenwasserstoffe zumindest teilweise entzogen, womit wiederum eine Verringerung des gesamten Schadstoffausstoßes realisiert ist.

In einem Abgasstrang einer Verbrennungskraftmaschine wird der Zwischenspeicher sinnvollerweise als Filterkörper verwendet, der bei Temperaturen unterhalb der Ansprechtemperatur des Trägermaterials gleichzeitig die Speicherung von NOx und Kohlenwasserstoffen und oberhalb der Ansprechtemperatur die Oxidation von Kohlenwasserstoffen und die Reduktion von Stickoxiden bewirkt, wobei in diesem Temperaturbereich zweckmäßigerweise die Freigabe der zuvor gespeicherten Kohlenwasserstoffe und Stickoxide an das Gas erfolgt.

Die Oxidation und die Reduktion sowie die Zwischenspeicherung der Kohlenwasserstoffe wird hierbei von dem Trägermaterial, das ggf. weitere als die genannten Stoffe und/oder Elemente aufweist, übernommen, während die Zwischenspeicherung der NOx von dem Speichermaterial ausgeht.

weitere sinnvolle Ausgestaltungen sind den nachfolgenden Unteransprüchen entnehmbar. Im übrigen wird die Erfindung anhand von in den Zeichnungen dargestellten Ausführungsbeispielen nähers erläutert. Dabei zeigt
- Fig. 1: einen Ausschnitt einer Vorrichtung zum Reinigen von Abgasen einer Verbrennungskraftmaschine mit einem gleichzeitig als Zwischenspeicher ausgebildeten Zwischenspeicher,
- Fig. 2: den Ausschnitt nach Figur 1 mit anderem Zwischenspeicher,
- Fig. 3: den Ausschnitt nach Figur 1 mit dreigeteiltem Zwischenspeicher,
- Fig. 4: ein Diagramm der NO-Konzentration in Abhängigkeit der Temperatur.

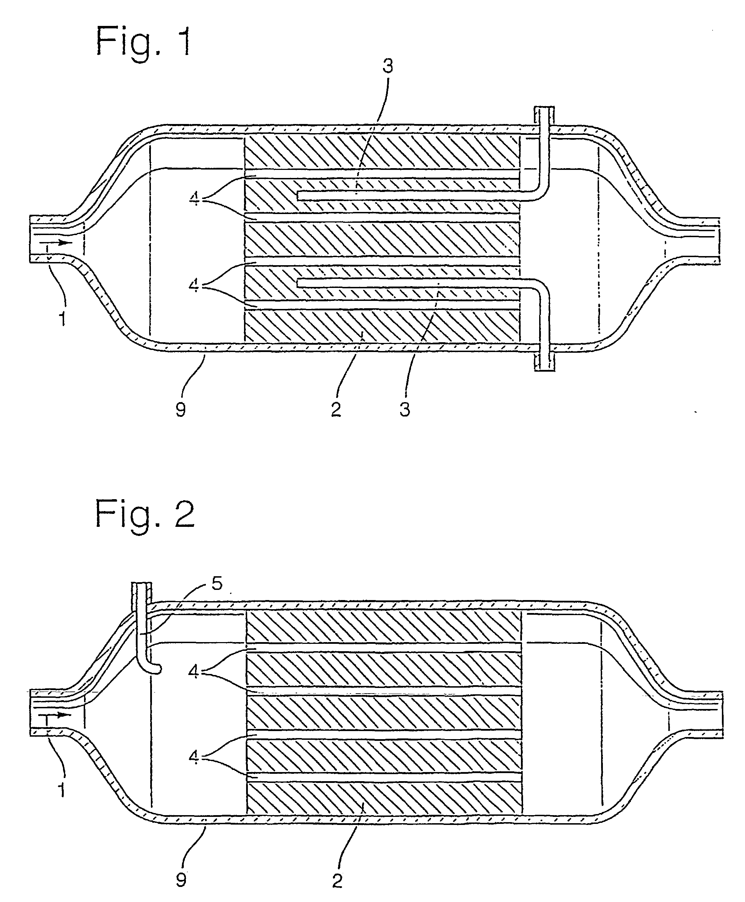

In Figur 1 ist als Vorrichtung zur Behandlung von Gasen eine Reinigungsanlage dargestellt, deren als Filterkörper ausgebildeter Zwischenspeicher 2 in einem Auspuffstrang 9 eines benzingetriebenen Ottomotors, insbesondere von einem Personenkraftwagen eingebaut ist. Der poröse Zwischenspeicher 2 ist u.a. aus einem Speichermaterial und einem Trägermaterial für das Speichermaterial gebildet.

Das Speichermaterial ist ein oder mehrere Metallen der ersten und/oder achten Nebengruppe und/oder eine oder mehrere von deren Metallverbindungen, insbesondere deren Oxide, und/oder eine oder mehrere von deren Metallegierungen gewählt wird.

Im vorliegenden Ausführungsbeispiel handelt es bei dem Zwischenspeicher um eine silberhaltige Zusammensetzung der allgemeinen chemischen Formel Ag•CuAl₂O₄, das gemäß einem aus der WO 94/02244 bekannten Verfahren dem Trägermaterial hergestellt wurde. Als Speichermaterial wird hier das Silber verwendet, während das CuAl₂O₄ das Trägermaterial darstellt. Der Zwischenspeicher 2 hat die Eigenschaft, daß im Stickoxid-haltigen Gas bei Temperaturen unterhalb 145 °C Stickoxid vermutlicherweise adsorbtiv gebunden gespeichert und es oberhalb 145 °C wieder freigegeben wird.

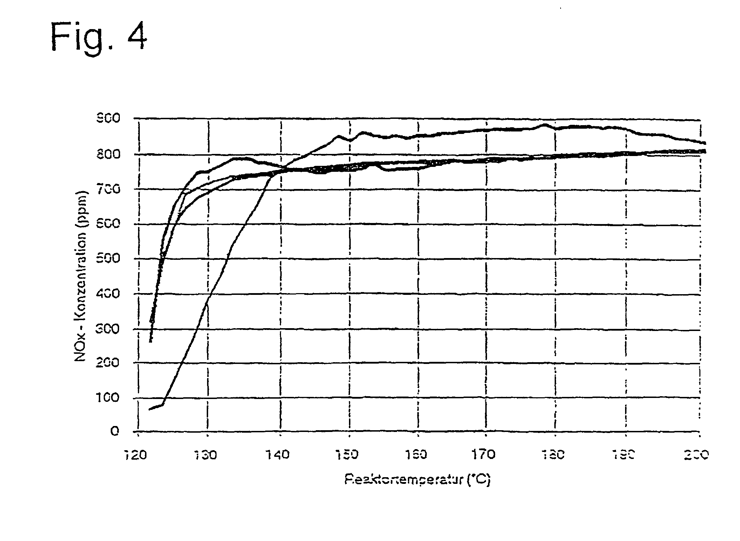

Von besonderem Interesse ist der Umstand, daß dieser Prozeß auch dann stattfindet, wenn in dem Abgas nicht vernachlässigbare Anteile Wasser vorliegt. Dieser sich überraschend ergebende Effekt ist aus dem beiliegenden Diagramm nach Figur 4 ersichtlich ist.

Zur Messung des Diagramms nach Figur 4 wurde das in Pellets extruierte poröse Zusammensetzung aus Speichermaterial und Trägermaterial in einem beheizbaren Reaktor einem Gasstrom aus gesetzt, dessen Strömungsgeschwindigkeit ca. 30 000 l/h betrug. Die Zusammensetzung des Gases war wie folgt: Ar + 800 ppm NO + 800 ppm C₃H₅ + 10% 02 + 8% H₂O. Aus dem Diagramm, das zum Vergleich auch das Verhalten anderer Spinelle bei Anwesenheit von Wasser aufweist, ist deutlich die Speicherung von NO unterhalb von 145 °C erkennbar. Des weiteren zeigt der Anstieg oberhalb von 145 °C der NO-Konzentration über den eingeleiteten Anteil von 800 ppm NO hinaus, daß das zuvor gespeicherte NO wieder abgegeben wird. Da bei einer Verbrennung Wasser entsteht ist diese Eigenschaft des Speichermaterials von wichtiger Bedeutung.

Der Zwischenspeicher 2 weist Durchströmkanäle 4 auf, durch die das zu reinigende Abgas hindurchströmt und die hier zur besseren Veranschaulichung als geradlinige Kanäle dargestellt sind.

Das durch einen Durchströmkanal 4 hindurchströmende Abgas weist u.a. Kohlenwasserstoffe auf, die ab einer bestimmten Ansprechtemperatur des katalytisch wirksamen Trägermaterials als Reduktionsmittel für die ebenfalls im Abgas vorliegenden Stickoxide und hierbei insbesondere von NO und NO₂ dienen. Nach einer bestimmten Behandlungsstrecke sind die Kohlenwasserstoffe jedoch verbraucht, so daß der Zwischenspeicher 2 hinsichtlich seiner katalytischen Wirkung auf die Schadstoffe gesättigt ist.

Damit innerhalb des Zwischenspeichers 2 der Reinigungsanlage eine weitere Reduktion der Schadstoffe möglich ist, weist der aus dem als Katalysator wirkenden Trägermaterial und aus dem Speichermaterial gefertigte Zwischenspeicher 2 zwischen zwei Durchströmkanälen 4 einen Beigabekanal 3 einer Zuführeinrichtung für das Reduktionsmittel auf. Der Beigabekanal 3 ist mit einem nicht dargestellten Reservoir der Zuführeinrichtung verbunden. Zweckmäßigerweise ist der Beigabekanal 3 über geeignete Sicherheitsmaßnahmen mit der Tankentlüftung des Kraftfahrzeugs verbunden, so daß der insbesondere der Gasraum des Tanks das Reservoir bildet.

Der sacklochartige Beigabekanal 3 ist - in Strömungsrichtung 1 des Abgases betrachtet - gaszuströmseitig verschlossen und gasabströmseitig mit dem Reservoir verbunden. Als günstige Reduktionsmittel haben sich Ammoniak und für den Gebrauch in Kraftfahrzeugen insbesondere Kohlenwasserstoffe bewährt.

Zur Zuführung von Reduktionsmittel strömt das Reduktionsmittel gasabströmseitig ein, und diffundiert durch den porösen und kapillarwirsamen Zwischenspeicher 2 in die Durchströmkanäle 4 und verdampft dort, wodurch in dem bereits teilgereinigten Abgas die Konzentration des Reduziermittels erhöht wird.

Die innerhalb des Zwischenspeichers 2 stattfindende Erhöhung der Konzentration der Kohlenwasserstoffe bewirkt, daß die in dem vorgereinigten Abgas verbleibenden Schadstoffe während der weiteren Durchströmung des Abgases durch den Zwischenspeicher 2 hindurch weiter reduziert werden, wodurch das Abgas in der gesamten Reinigungsanlage besser gereinigt wird. Die Schadstoffverringerung kann in vorteilhafter Weise auch hinsichtlich der Konzentration an Kohlenmonoxid und/oder an Kohlenwasserstoffen des Abgases erfolgen.

Damit die Menge des zugeführten Reduktionsmittels nicht zu groß ist, weist die Zuführeinrichtung sinnvollerweise noch eine Dosiereinrichtung ( nicht eingezeichnet ), bspw. eine volumetrische Pumpe auf, so daß die Beigabe an Reduktionsmittel exakt dosiert werden kann.

Der Beigabekanal 3 kann auch vom Außenumfang des Zwischenspeichers 2 beginnend quer zur Strömungsrichtung 1 des Abgases bis hin zur Mitte des Zwischenspeichers 2 eingebracht sein. Dieses nicht dargestellte Ausführungsbeispiel hat den Vorteil, daß mit einem einzigen Beigabekanal 3 mehrere Durchströmkanäle 4 gleichzeitig mit dem Reduziermittel beaufschlagt werden können. Des weiteren ist es hier günstig, daß der oder die Beigabekanäle 3 in einfacher Weise vom Außenumfang des Zwischenspeichers 2 her mit dem Reduziermittel versorgt werden können.

Bei einem porös ausgebildeten Zwischenspeicher 2 kann in bevorzugter Weise die Zuführeinrichtung umfangsseitig am Zwischenspeicher 2 angeordnete Düsen, insbesondere eine Ringdüse 6 aufweisen, durch die das Reduktionsmittel, bevorzugt quer zur Strömungsrichtung 1 des Abgases durch den Zwischenspeicher 2 hindurch, ausströmbar ist. Der Transport des vorzugsweise gasförmigen Reduktionsmittels in Richtung des durch die Poren des porösen Zwischenspeichers 2 hindurchströmenden Abgases erfolgt ebenfalls durch die Poren des Zwischenspeichers 2 hindurch.

Die Beigabe des Reduziermittels erfolgt zweckmäßigerweise nach einer Behandlungsstrecke, die einer Sättigungslänge des Zwischenspeichers 2 entspricht, wobei die Sättigungslänge derjenigen von dem Gas durchströmten Strecke entspricht, nach der - in Strömungsrichtung 1 betrachtet - im Trägermaterial des Zwischenspeichers 2 eine Sättigung der Schadstoffverringerung, insbesondere der Reduktion von Stickoxiden eintritt.

In der Figur 2 ist eine weitere Reinigungsanlage dargestellt, deren Zwischenspeicher 2 ebenfalls in dem Auspuffstrang 9 einer Brennkraftmaschine, insbesondere eines benzingetriebenen Ottomotors oder eines mager betriebenen Ottomotors angeordnet ist. Um überflüssige Wiederholungen zu vermeiden, wird im folgenden jedoch nur noch auf die Unterschiede zwischen diesem Ausführungsbeispiel und demjenigen nach der Figur 1 eingegangen.

In dem Ausführungsbeispiel nach Figur 2 weist die Zuführeinrichtung eine gaszuströmseitig vor dem von dem Abgas durchströmbaren Zwischenspeicher 2 angeordnete Zerstäuberdüse 5 auf, die zum Zerstäuben des Reduziermittels vorgesehen ist. Die Zerstäuberdüse 5 ist derart bemessen, daß das Reduziermittel in Tropfen einer solchen Größe zerstäubt wird, daß ein Tropfen erst nach einer bestimmten Eindringtiefe in den Zwischenspeicher 2, die vorzugsweise mindestens der Sättigungslänge entspricht, in dem Zwischenspeicher 2 vollständig verdampft ist. Eine derartige Tropfengröße kann bspw. empirisch ermittelt werden. Die erneute Zugabe des Reduktionsmittels innerhalb des Zwischenspeichers 2 erfolgt damit durch die Verdampfung der Tropfen innerhalb des Zwischenspeichers 2.

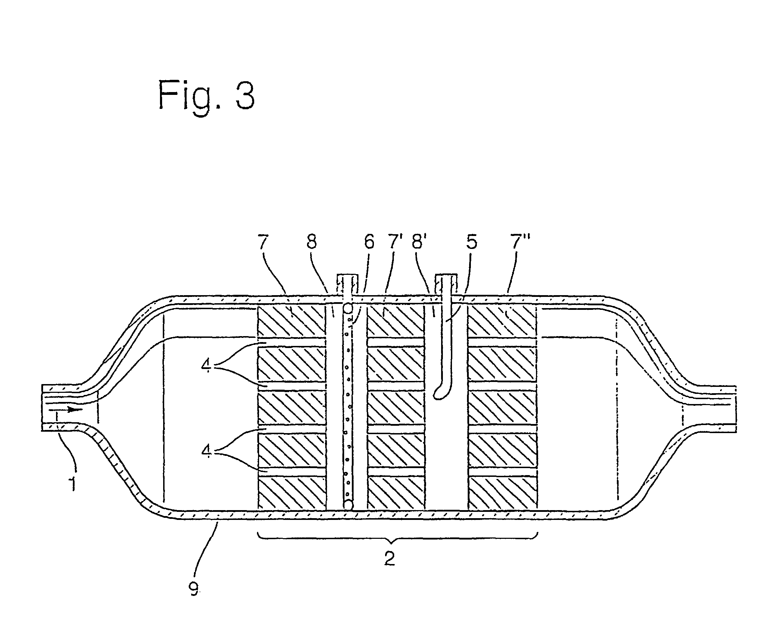

In Figur 3 ist ein weiteres Ausführungsbeispiel einer Reinigungsanlage dargestellt, wobei auch hier zur Vermeidung von überflüssigen Wiederholungen, nur auf die Unterschiede zwischen diesem Ausführungsbeispiel und denjenigen nach den Figuren 1 und 2 eingegangen wird.

In dem Ausführungsbeispiel gemäß Figur 3 ist der Zwischenspeicher 2 in der Art einer Filterkaskade dreigeteilt ausgebildet. Die von dem Abgas durchströmbaren und porös ausgebildeten Teilkörper 7, 7', 7'' des Zwischenspeichers 2 sind räumlich voneinander beabstandet und in Strömungsrichtung 1 des Abgases hintereinander angeordnet. Die in Strömungsrichtung 1 gemessene Länge eines Teilkörpers 7, 7', 7'' entspricht sinnvollerweise der Sättigungslänge des Trägermaterials des Zwischenspeichers 2.

In den zwischen den Teilkörpern 7, 7', 7'' des Zwischenspeichers 2 angeordneten Zwischenräumen 8, 8' sind Düsen 5 und 6 angeordnet, die der Zuführeinrichtung zugeordnet sind. Aus den Düsen - in dem ersten Zwischenraum 8 eine randseitig angeordnete und radial nach innen ausströmende Ringdüse 6 und in dem zweiten Zwischenraum 8' eine mittig angeordnete Zerstäuberdüse 5, strömt das Reduktionsmittel in den jeweiligen Zwischenraum 8, 8' ein und vermischt sich mit dem bereits teilgereinigten Abgas. Ein Zwischenraum 8, 8' kann daher als eine Art Mischkammer aufgefaßt werden. Das in einem Zwischenraum 8, 8' mit Reduktionsmittel angereicherte Abgas wird dann dem nächsten Teilkörper 7' bzw. 7'' zur weiteren Verringerung von Schadstoffen zugeführt.

In allen Ausführungsbeispielen ist das Trägermaterial ein Spinell, wobei im Sinne der Erfindung unter einem Spinell ein Material der allgemeinen chemischen Formel AₐB_{b}O₄ zu verstehen ist, das zumindest mikroskopisch eine kristallographische oder kristallähnliche kubische Gitterstruktur mit flächenzentriert angeordneten Sauerstoffionen und tetraedrischen und oktaedrischen Lücken aufweist, in welchen tetraedrischen Lücken die A-Teilchen und bis zu 50% der B-Teilchen und in welchen oktaedrischen Lükken die restlichen B-Teilchen angeordnet sind. Hier bezeichnet ein A- bzw. B-Teilchen nur deren kristallographische Anordnung.

Im Sinne der Erfindung sind als Spinelle auch unterstöchiometrische Verbindungen und/oder Zusammensetzungen anzusehen, bei denen das B_{b}O₃ als Matrix fungiert und die im Röntgenspektrum die charakteristischen Spinellinien aufweisen, wobei der Spinell der formalen Zusammensetzung AₐB_{b}O₄ in einer B_{b}O₃ Matrix vorliegt, so daß sich formal eine Stöchiometrie von Aₐ(1-x)B_{b}O₄ ergibt. In stofflicher Hinsicht können die A-, wie auch die B-Teilchen unterschiedlich zueinander sein.

In dem als Trägermaterial verwandten Spinell ist das A-Teilchen eines oder mehrere der Elemente der A-Gruppe der Mg, Ca, Mn, Fe, Ni, Co Cu, Zn, Sn und Ti und das B-Teilchen eines oder mehrere Elemente der B-Gruppe Al, Ga, In, Co, Fe, Cr, Mn, Cu, Zn, Sn, Ti und Ni. Allerdings ist zu beachten, daß keines der Elemente der Ausschlußgruppe Mn, Fe und Co gleichzeitig ein A- und ein B-Teilchen sein kann.

Als besonders zweckmäßig haben sich hier bei folgende zumindest spinellartige Zusammensetzungen erwiesen: (MgCu)Al₂O₄, (CuCu)Al₂O₄, (CuZn)Al₂O₄, (CoZn)CuAl₂O₄, Gemische aus (ZnCu)Al₂O₄ mit WO₃ und/oder V₂O₅ und/oder TiO₂ und hierbei insbesondere in der Zusammensetzung Mg_{0.5}Cu_{0.5}Al₂O₄, Cu_{0.5}Cu_{0.5} Al₂O₄, Cu_{0.5}Zn_{0.5} Al₂O₄, Co_{0.25}Zn_{0.25}Cu_{0.5}Al₂O₄, oder deren Gemische mit 10% WO₃ und 6% V₂O₅ und/oder 84% TiO₂ und/oder Al₂O₃.

Des weiteren hat es sich als günstig erwiesen, die als Trägermaterialien verwandten Spinelle mit katalytisch aktiven Elementen Palladium, Platin, Rhodium, Rutenium, Osmium, Iridium, Rhenium und/oder seltene Erden wie Lantan und Cer, vanadium, Titan, Niob, Molybdän, Wolfram und/oder deren Salze und/oder deren Oxide zu versehen.

Auf einige dieser eben genannten Materialien bzw. deren Kombinationen wird beispielhaft in den nachfolgenden Beispielen genauer eingegangen.

### Beispiel 1)

Als Spinell für das Trägermaterial wird ein mit Kupfer imprägnierter Kupfer/Aluminium-Spinell, insbesondere der Zusammensetzung Cu_{0.5}Cu_{0.5}Al₂O₄ verwandt. Die Herstellung des Spinells erfolgt mit einem Verfahren, wie es aus der DE 43 01 4709 A1 bekannt ist. Zur Aufnahme eines NOx/CO₂-Diagramms in Abhängigkeit der Temperatur wurden 10 Gramm Split des Cu-imprägnierten CuAl₂O₄ - Spinells in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe betrug etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch das Trägermaterial wurde ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wurde die NO-Konzentration mit einem Gasdetektor gemessen, wobei vor der Detektion eventuell gebildetes NO₂ in einem Konverter zu dem Stickoxid NO reduziert wurde. Simultan wurde eine Oxidation von Kohlenwasserstoffen zu CO₂ durch Messung des CO₂-Gehalts durch den Gasdetektor beobachtet.

Als Ergebnis der Messung des Spinells ergibt sich ein Verlauf des NO- und des CO₂-Anteiles als Funktion der Temperatur. Es ist eine deutliche Abnahme der NOx(NO)-Konzentration mit zunehmender Temperatur erkennbar, die zwischen ca. 276 bis 294°C einen Tiefpunkt erreicht und anschließend wieder ansteigt. Für das Cu imprägnierten CuAl₂O₄ wird ab ca. 200 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx vorliegt, beträgt je nach Zusammensetzung des Materials zwischen 200 °C und 400 °C.

Da die Meßverfahren vergleichbar sind, wird bei den nachfolgenden Beispielen zur Vermeidung unnötiger Wiederholungen nur noch auf die sich ergebenden Unterschiede eingegangen.

### Beispiel 2)

Als Spinell für das Trägermaterial wird ein Magnesium/Kupfer/Aluminium-Spinell, insbesondere der Zusammensetzung Mg_{0.5}Cu_{0.5}Al₂O₄ verwandt. Die Herstellung des Spinells erfolgt günstigerweise analog einem Verfahren, wie es aus der DE 43 01 4709 A1 bekannt ist.

Der Verlauf des NO-Anteiles zeigt eine deutliche Abnahme der NO-Konzentration mit zunehmender Temperatur, die bei ca. 320 °C einen Tiefpunkt erreicht.

### Beispiel 3)

Als Trägermaterial wird ein eine Spinellstruktur aufweisendes Gemenge der Zusammensetzung 20 % ZnO, 16% CuO, und 64 % Al₂O₃ verwandt, in den folgenden Beispielen 3 bis 7 vereinfachend ZnCuAl₂O₄-Spinell genannt, der mit 1,6 Gew.-% CeO₂ imprägniert ist.

Als Ergebnis der Messung des ZnCuAl₂O₄-Spinells ergibt sich eine deutliche Abnahme der NOx(NO)-Konzentration mit zunehmender Temperatur, die bei ca. 430 °C einen Tiefpunkt erreicht und anschließend wieder ansteigt. Für das ZnCuAl₂O₄-Spinell + 1,6 Gew.- % CeO₂wird ab ca. 150 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 150 °C und 500 °C.

### Beispiel 4)

Als Spinell für das Trägermaterial wird ein obige ZnCuAl₂O₄-Spinell verwandt, der zusätzlich 8 Gew.-% CeO₂ aufweist. Zur Herstellung dieses Spinells wird, ausgehend von einem ZnCuAl₂O₄-Spinell, der Spinell mit 8 Gew.-% CeO₂ imprägniert.

Als Ergebnis der Messung des mit 8 Gew.-% imprägnierten ZnCuAl₂O₄-Spinells gemäß ergibt sich eine deutliche Abnahme der NOx(NO)-Konzentration mit zunehmender Temperatur, die bei ca. 300 °C einen Tiefpunkt erreicht und anschließend wieder ansteigt.

Für den ZnCuAl₂O₄-Spinell + 8 Gew.-% CeO₂ wird ab ca. 200 °C eine drastische Abnahme der NOx-Konzentration beobachtet, wobei gleichzeitig die Kohlenwasserstoffe zu CO₂ umgesetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 200 °C und 500 °C.

### Beispiel 5)

Als Spinell für das Trägermaterial wird das schon erwähnte ZnCuAl₂O₄-Spinell verwandt, das nunmehr mit den Oxiden von Wolfram, Vanadium und Titan vermischt ist. Das Gemisch weist zu 50 Gew.-% das ZnCuAl₂O₄-Spinell auf, wobei die restlichen 50 Gew.-% des Gemisches aus 5 Gew.-% WO₃, 3 Gew.-% V₂O₅ und 42 Gew.-% TiO₂ gebildet ist

Als Ergebnis der Messung des Spinells gemäß Beispiel 5 ergibt sich eine deutliche Abnahme der NOx(NO)-Konzentration mit zunehmender Temperatur, die bei ca. 240 °C einen Tiefpunkt erreicht und anschließend wieder ansteigt.

Für das Gemisch wird ab ca. 150 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 150 °C und 500 °C.

### Beispiel 6)

Als Spinell für das Trägermaterial wird ein ZnCuAl₂O₄-Spinell der bekannten Zusammensetzung verwandt, der mit 0,1 % Vanadium imprägniert ist.

Als Ergebnis der Messung des Spinells gemäß Beispiel 6 ergibt sich eine deutliche Abnahme der NOx (NO)-Konzentration mit zunehmender Temperatur, die bei ca. 300 °C einen Tiefpunkt erreicht und anschließend wieder ansteigt.

Für den ZnCuAl₂O₄-Spinell + Vanadium wird ab ca. 170 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 170 °C und 500 °C.

### Beispiel 7)

Als Spinell für das Trägermaterial wird erneut der ZnCuAl₂O₄-Spinell verwandt, der mit 0.5% Palladium imprägniert ist.

Als Ergebnis der Messung des Spinells gemäß Beispiel 7 ergibt sich eine deutliche Abnahme der NOx(NO)-Konzentration mit zunehmender Temperatur, die bei ca. 280 °C einen Tiefpunkt erreicht und anschließend wieder ansteigt.

Für den ZnCuAl₂O₄-Spinell + 0.5 Gew.-% Pd wird ab ca. 180 °C eine drastische Abnahme der NOx-Konzentration beobachtet, wobei gleichzeitig die Kohlenwasserstoffe zu CO₂ zersetzt werden, wie es sich an der Zunahme der CO₂-Konzentration zeigt. Das Temperaturfenster, in dem eine Reduktion des NOx's vorliegt, beträgt je nach Zusammensetzung des Materials zwischen 180 °C und 500 °C.

Bei allen Beispielen liegt das angegebene Temperaturintervall günstigerweise bei etwa den Temperaturen, die in einem Abgasstrang eines Auspuffes einer Brennkraftmaschine auftreten können.

Da die für das Trägermaterial verwendeten Spinelle bereits bei relativ niedrigen Temperaturen ein gutes Ansprechverhalten und ferner unterhalb dieser Ansprechtemperatur ein gutes Speicherverhalten von Kohlenwasserstoffen aufweisen, sind sie insbesondere zum Einsatz als HC und/oder CO und/oder NOx-Abgaskatalysator bei stöchiometrisch betriebenen Brennkraftmaschinen bei sogenannten 3-Wege-Katalysatoren geeignet.

Weitere Untersuchungen an diesen Trägermaterialien ergaben zusätzlich noch eine hohe Beständigkeit gegenüber NOx, H₂O, CO₂ und H₂O.

## Patentansprüche

1. Vorrichtung zum reinigenden Behandeln von strömenden Gasen, mit einer Behandlungseinheit, bei mit Kohlenwasserstoffen betrieben Verbrennungskraftmaschinen, wobei
- die Behandlungseinheit einen zumindest teilweise im Gasstrom angeordneten Zwischenspeicher aufweist, der von dem Gas umund/oder durchströmt ist,
- ein Trägermaterial eine Zusammensetzung der allgemeinen chemischen Formel AₐB_{b}O₄ bzw. A-Oxid·B-Oxid aufweist, wobei A und B Metalle sind, und zumindest mikroskopisch eine kristalline oder kristallähnliche kubische Gitterstruktur mit flächenzentriert angeordneten Sauerstoffatomen und tetraedrischen und oktaedrischen Lücken besitzt, wobei in den tetraedrischen Lücken die A-Teilchen und bis zu 50% der B-Teilchen und in den oktaedrischen Lücken die restlichen B-Teilchen angeordnet sind, und a + b ≤ 3 und a, b > 0 bedeuten, und
- daß die A-Teilchen ein, vorzugsweise mehrere Elemente der A-Gruppe Mg, Ca, Mn, Fe, Ni, Co Cu, Zn, Sn und Ti und die B-Teilchen ein, vorzugsweise mehrere Elemente der B-Gruppe Al, Ga, In, Co, Fe, Cr, Mn, Cu, Zn, Sn, Ti und Ni darstellen, wobei für A- und B-Teilchen der Ausschlußgruppe Mn, Fe und Co die jeweils verwendeten A- und B-Teilchen ungleich sind
**dadurch gekennzeichnet,**
- **daß** der Zwischenspeicher (2) aus einem Speichermaterial und aus dem Trägermaterial für das Speichermaterial gebildet ist,
- **daß** das Speichermaterial aus einem oder mehreren Metallen der ersten und/oder achten Nebengruppe des Periodensystems und/oder deren Oxiden und/oder deren Legierungen besteht,
- **daß** das Trägermaterial oberhalb einer stoffspezifischen Ansprechtemperatur bei Anwesenheit von Kohlenwasserstoffen für Stickoxide katalytisch reduzierend ist,
- **daß** das Trägermaterial gleichzeitig im stickoxidspeichernden Temperaturintervall des Speichermaterials eine hinsichtlich Kohlenwasserstoffen speichernde Wirkung aufweist, und
- **daß** das Speichermaterial Silber aufweist.

2. Vorrichtung nach Anspruch 1,
**dadurch gekennzeichnet,**
- **daß** das Trägermaterial anstelle einer stöchimetrischen Zusammensetzung ersatzweise eine unterstöchiometrische Zusammensetzung der allgemeinen chemischen Formel Aₐ₍₁₋ₓ₎B_{b}O₄ in einer B_{b}O₃ Matrix aufweist, wobei die Zusammensetzung ein Spinell oder spinellartig ist, und wobei die Zusammensetzung im Röntgenspektrum charakteristische Spinellinien aufweist, wobei gilt a + b < 3, mit a, b > 0 und 0 ≤ x < 1.

3. Vorrichtung nach Anspruch 1 oder 2,
**dadurch gekennzeichnet,**
**daß** der aus Speichermaterial und aus Trägermaterial gebildete Zwischenspeicher (2) eine im Spinell- und/oder spinellähnlichen Typ kristallisierte Zusammensetzung der allgemeinen chemischen Formel Ag·CuₓMe_{y}Al₂O₄ aufweist, wobei Me ein zweiwertiges Metall ist, x und y zwischen 0 und 1 betragen und x + y ≤ 1 ist.

4. Vorrichtung nach Anspruch 1 oder 2,
**dadurch gekennzeichnet,**
**daß** das Trägermaterial ein Material der chemischen Formel A1ₐ₁₍₁₋-ₓ₎A2ₐ₂₍₁₋ₓ₎B_{b}O₄ ist, wobei die A1- und die A2-Teilchen Teilchen der A-Gruppe sind, wobei gilt a1 + a2 + b ≤ 3 mit a1, a2, b > 0 und 0 ≤ x < 1.

5. Vorrichtung nach Anspruch 1 oder 2,
**dadurch gekennzeichnet,**
**daß** das Trägermaterial ein Material der chemischen Formel A1ₐ₁₍₁₋ₓ₎A2ₐ₂₍₁₋ₓ₎B₂O₄ ist, wobei die A1- und die A2-Teilchen Teilchen der A-Gruppe sind, wobei gilt a1 + a2 ≤ 1 mit a1, a2 > 0 und 0 ≤ x < 1.

6. Vorrichtung nach Anspruch 1 oder 2,
**dadurch gekennzeichnet,**
**daß** das Trägermaterial ein Material der chemischen Formel Al_{0.5(1-x)}A2_{0.5(1-x)}B₂O₄ ist, wobei gilt 0 ≤ x < 1.

7. Vorrichtung nach Anspruch 1 oder 2,
**dadurch gekennzeichnet,**
**daß** ein aus dem Trägermaterial gebildeter Trägerkörper als Heterogenkatalysator ausgebildet ist, und daß der Trägerkörper ein oder mehrere katalytisch aktive Elemente wie Palladium, Platin, Rhodium, Ruthenium, Osmium, Iridium, Rhenium und/oder seltene Erden wie Lanthan und Cer, Vanadium, Titan, Niob, Molybdän, Wolfram und/oder deren Salze und/oder deren Oxide aufweist.

8. Vorrichtung nach Anspruch 1 oder 2,
**dadurch gekennzeichnet,**
**daß** der vorzugsweise poröse Zwischenspeicher (2) in seinem Innern Gasströmkanäle aufweist.

9. Verwendung einer Vorrichtung nach Anspruch 1 oder 2 zur reinigenden Behandeln von strömenden Gasen bei mit Kohlenwasserstoffen betrieben Kraftwerken.

10. Verwendung einer Vorrichtung nach Anspruch 1 oder 2 zur reinigenden Behandeln von strömenden Gasen bei mit Kohlenwasserstoffen betrieben Benzin-Motoren.

11. Verwendung einer Vorrichtung nach Anspruch 1 oder 2 zur reinigenden Behandeln von strömenden Gasen bei mit Kohlenwasserstoffen betrieben Diesel-Motoren.

## Claims

1. Device for cleaning treatment of flowing gases, with a processing unit, for combustion engines driven with hydrocarbons, whereby
- the processing unit has one intermediate storage means that is at least partially disposed in the gas flow, the gas flowing around or through the said intermediate storage means,
- a carrier material has the general chemical formula AaBbO₄ or A-oxide B-oxide, whereby A and B are metals and, at least microscopically, have a crystalline or crystal-type cubic lattice structure with oxygen atoms that are face-centred, and tetrahedral and octahedral gaps, whereby the A-particles and up to 50% of the B-particles are disposed in the tetrahedral gaps and the remaining B-particles are disposed in the octahedral gaps, and a + b ≤ 3 and a, b > 0, and
- the A-particles are an element, preferably several elements, of the A-group Mg, Ca, Mn, Fe, Ni, Co, Cu, Zn, Sn and Ti, and the B-particles are an element, preferably several elements, of the B-group Al, Ga, In, Co, Fe, Cr, Mn, Cu, Zn, Sn, Ti and Ni, whereby the A- and B-particles used in each case of A- and B-particles of the exclusion group Mn, Fe and Co, are unequal,
**characterized in that** the intermediate storage means (2) is formed from a storage material and from the support material for the storage material,
- the storage material comprises one or more metals of the first and/or eighth auxiliary group of the periodic table and/or their oxides and/or their alloys,
- the carrier material is catalytically reductive for nitrogen oxides above a substance-specific response-temperature, in the presence of hydrocarbons,
- that the carrier material has a storing effect with regard to hydrocarbons, in the nitrogen oxides-storing temperature interval, and
- the storage material includes silver.

2. Device in accordance with claim 1,
**characterized in that**
the carrier material has, by way of substitution, a sub-stoichiometric composition of the general chemical formula Aₐ₍₁₋ₓ₎B_{b}O₄ in a B_{b}O₃ matrix, instead of a stoichiometric composition, whereby the composition is that of a spinel or is spinel-like, and whereby the composition shows characteristic spinel lines in the X-ray spectrum, whereby a + b < 3, with a, b > 0.

3. Device in accordance with claim 1 or 3,
**characterized in that**
the intermediate storage means (2) formed from storage material and carrier material has a spinel and/or spinel-type composition of the general chemical formula Ag.CuₓMe_{y}Al₂O₄, whereby Me is a bivalent metal, x and y lie between 0 and 1, and x + y ≤ 1.

4. Device in accordance with claim 1 or 2,
**characterized in that**
the carrier material has the chemical formula Alₐₗ₍₁₋ₓ₎A2ₐ₂₍₁₋ₓ₎B_{b}O₄, whereby the Al and the A2 particles are particles of the A group, whereby a1 + a2 + b ≤ 3 with a1, a2, b > 0 and 0 ≤ x < 1.

5. Device in accordance with claim 1 or 2,
**characterized in that**
the carrier material has the chemical formula A1ₐ₁₍₁₋ₓ₎A2ₐ₂₍₁₋ₓ₎B₂O₄, whereby a1 + a2 ≤ 1 with a1, a2 > 0 and 0 ≤ x < 1.

6. Device in accordance with claim 1 or 2,
**characterized in that**
the carrier material has the chemical formula A1_{0.5(1-x)}A2_{0.5(1-x)}B₂O₄, whereby 0 ≤ x < 1.

7. Device in accordance with claim 1 or 2,
**characterized in that**
a support body formed from the carrier material is developed as a heterogeneous catalyst, and that the support body has one or more catalytically active elements such as palladium, platinum, rhodium, ruthenium, osmium, iridium, rhenium and/or rare earths such as lanthanum and cerium, vanadium, titanium, niobium, molybdenum, tungsten and/or their salts and/or their oxides.

8. Device in accordance with claim 1 or 2,
**characterized in that**
the intermediate storage means (2), which is preferably porous, has gas flow channels inside it.

9. Use of a device in accordance with claim 1 or 2 for cleaning treatment of flowing gases in power stations driven by hydrocarbons.

10. Use of a device in accordance with claim 1 or 2 for cleaning treatment of flowing gases in fuel engines driven by hydrocarbons.

11. Use of a device in accordance with 1 or 2 for cleaning treatment of flowing gases in diesel motors driven with hydrocarbons.

## Revendications

1. Dispositif pour la purification de gaz en écoulement, avec une unité de traitement, sur les moteurs à combustion interne fonctionnant avec hydrocarbures, dans lequel
- l'unité de traitement présente un réservoir intermédiaire disposé au moins partiellement dans l'écoulement de gaz, autour duquel et/ou à travers lequel le gaz s'écoule,
- une matière support présente une composition de formule chimique générale AₐB_{b}O₄ ou oxyde A•oxyde B, A et B étant des métaux, et possède au moins de manière microscopique une structure réticulaire cubique cristalline ou similaire au cristal avec des atomes d'oxygène disposés de manière centrée sur la surface et des creux tétraédriques ou octaédriques, les particules A et jusqu'à 50 % des particules B étant disposées dans les creux tétraédriques et les particules B restantes dans les creux octaédriques, et a + b signifie ≤ 3 et a, b > 0, et
- les particules A représentent un, de préférence plusieurs éléments du groupe A Mg, Ca, Mn, Fe, Ni, Co, Cu, Zn, Sn et Ti et les particules B de préférence plusieurs éléments du groupe B Al, Ga, In, Co, Fe, Cr, Mn, Cu, Zn, Sn, Ti et Ni, les particules A et B respectivement utilisées étant inégales pour les particules A et B du groupe d'exclusion Mn, Fe et Co,
**caractérisé en ce**
- **que** le réservoir intermédiaire (2) est constitué d'un matériau de réservoir et de la matière support pour le matériau du réservoir,
- **que** le matériau du réservoir est constitué d'un ou plusieurs métaux du premier et/ou du huitième groupes auxiliaires du tableau périodique des éléments et/ou de leurs oxydes et/ou de leurs alliages,
- **que** la matière support est, au-dessus d'une température de réponse spécifique à une substance, en présence d'hydrocarbures, réduit de manière catalytique l'oxyde d'azote,
- **que** la matière support présente en même temps, dans l'intervalle de température, emmagasinant l'oxyde d'azote, du matériau du réservoir, une action d'emmagasinage concernant les hydrocarbures, et
- **que** le matériau du réservoir présente de l'argent.

2. Dispositif selon la revendication 1,
**caractérisé en ce**
- **que** la matière support, au lieu d'une composition stoechiométrique, présente en remplacement une composition sous-stoechiométrique de formule chimique générale Aₐ₍₁₋ₓ₎B_{b}O₄ dans une matrice B_{b}O₃, la composition étant une spinelle ou de type spinelle et la composition présentant, dans le spectre de rayons X, des lignes caractéristiques de spinelle, où a + b < 3, avec a, b > 0 et 0 ≤ x < 1.

3. Dispositif selon la revendication 1 ou 2,
**caractérisé en ce**
**que** le réservoir intermédiaire (2) constitué du matériau du réservoir et de la matière support présente une composition cristallisée de type spinelle et/ou similaire à une spinelle, de formule chimique générale Ag·CuₓMe_{y}Al₂O₄, Me étant un métal bivalent, x et y étant compris entre O et 1 et x + y étant ≤ 1.

4. Dispositif selon la revendication 1 ou 2,
**caractérisé en ce**
**que** la matière support est une matière de formule chimique Alₐ₁₍₁₋ₓ₎A2ₐ₂₍₁₋ₓ₎B_{b}O₄, les particules Al et 2 étant des particules du groupe A, où a1 + a2 + b ≤ 3, avec a1, a2, b > 0 et 0 ≤ x < 1.

5. Dispositif selon la revendication 1 ou 2,
**caractérisé en ce**
**que** la matière support est une matière de formule chimique A1ₐ₁₍₁₋ₓ₎A2ₐ₂₍₁₋ₓ₎B₂O₄, les particules Al et 2 étant des particules du groupe A, où a1 + a2 ≤ 1, avec a1, a2 > 0 et 0 ≤ x < 1.

6. Dispositif selon la revendication 1 ou 2,
**caractérisé en ce**
**que** la matière support est une matière de formule chimique Al_{0,5(1-x)}A2_{0,5(1-x)}B₂O₄, où 0 ≤ x ≤ 1.

7. Dispositif selon la revendication 1 ou 2,
**caractérisé en ce**
**qu'**un corps support constitué par la matière support est conçu en tant que catalyseur hétérogène et en ce que le corps support présente un ou plusieurs éléments à activité catalytique comme le palladium, le platine, le rhodium, le ruthénium, l'osmium, l'iridium, le rhénium et/ou les terres rares comme le lanthane et le cérium, le vanadium, le titane, le niobium, le molybdène, le tungstène et/ou leurs sels et/ou leurs oxydes.

8. Dispositif selon la revendication 1 ou 2,
**caractérisé en ce**
**que** le réservoir intermédiaire (2), poreux de préférence, présente dans Son intérieur des canaux d'écoulement de gaz.

9. Utilisation d'un dispositif selon la revendication 1 ou 2 pour la purification de gaz en écoulement dans les centrales fonctionnant avec de hydrocarbures.

10. Utilisation d'un dispositif selon la revendication 1 ou 2 pour la purification de gaz en écoulement sur les moteurs à essence fonctionnant avec de hydrocarbures.

11. Utilisation d'un dispositif selon la revendication 1 ou 2 pour la purification de gaz en écoulement sur les moteurs diesel fonctionnant avec de hydrocarbures.
